# EUROPEAN PATENT APPLICATION

(11) **EP 4 760 887 A1**
(43) Date of publication of application: **17.06.2026**
(21) Application number: 25854582.1
(22) Date of filing: 04.08.2025
(51) Int. Cl.: H01M 10/658, H01M 50/211, B32B 5/18, B32B 27/06

(54) **INSULATION PAD FOR SECONDARY BATTERY AND BATTERY MODULE INCLUDING SAME**

(30) Priority: 14.08.2024 KR 20240109392
(71) Applicant: LG Energy Solution, Ltd., Seoul 07335 (KR)
(72) Inventor: KANG, Kyung Min, Daejeon 34122 (KR)
(74) Representative: Plasseraud IP
(86) International application number: PCT/KR2025/011627
(87) International publication number: WO 2026/038775

(57) **Abstract**

Disclosed are a thermal insulation pad for secondary batteries, the thermal insulation pad including a support member and a foam layer formed on one surface of the support member, wherein the foam layer includes an edge portion and a central portion located inside the edge portion, and the porosity of the edge portion is less than the porosity of the central portion.

## Description

### [Technical Field]

This application claims the benefit of priority to Korean Patent Application No. 2024-0109392 filed on August 14, 2024, the disclosure of which is incorporated herein by reference in its entirety.

The present invention relates to a thermal insulation pad for secondary batteries and a battery module including the same. More particularly, the present invention relates to a thermal insulation pad for secondary batteries disposed between a plurality of battery cells arranged in tight contact with each other to inhibit thermal propagation and to enhance thermal insulation performance and a battery module including the same.

### [Background Art]

A lithium secondary battery, which is capable of being charged and discharged, has been widely used as an energy source for wireless mobile devices or wearable devices, which are worn on bodies, and has also been used as an energy source for electric vehicles and hybrid electric vehicles presented as alternatives to existing gasoline and diesel vehicles, which cause air pollution.

The lithium secondary battery may be classified as a prismatic battery cell including a metal can-shaped case, a cylindrical battery cell including a metal can-shaped case, or a pouch-shaped battery cell including a case formed of a laminate sheet. Thereamong, the pouch-shaped battery cell is most commonly used due to easy deformation and an increase in energy density when stored and stacked.

Generally, for a lithium secondary battery, the volume of a battery cell may expand during repeated charging and discharging. When a plurality of pouch-shaped battery cells is stacked in tight contact with each other to manufacture a battery module, the battery cells received in a case of the battery module may be damaged or deformed by the expansion pressure of the battery cells.

If an elastic thermal insulation pad is interposed between the pouch-shaped battery cells to accommodate the volume of the expanded battery cells, it is possible to reduce pressure deviation between the battery cells and to maintain a constant surface pressure.

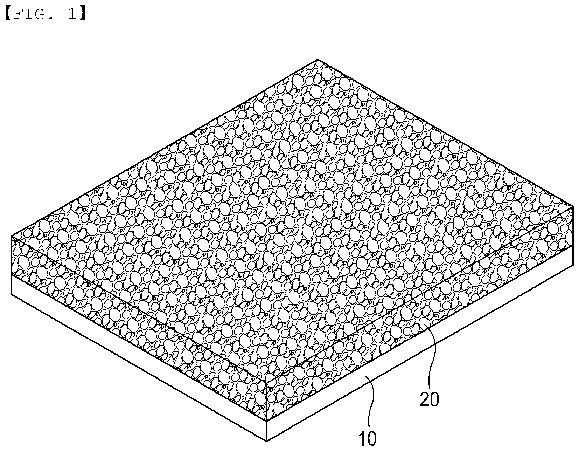

FIG. 1 is a perspective view of a conventional thermal insulation pad. Referring to FIG. 1, the thermal insulation pad is configured such that a foam layer 20 is disposed on one side surface of a support member 10, and thermal insulation pads each having this structure and pouch-shaped battery cells (not shown) may be alternately stacked to form a battery cell stack.

Meanwhile, if ignition occurs in any one of the plurality of battery cells constituting the battery cell stack, high-temperature gas, thermal energy, and flames may propagate to adjacent battery cells through the foam layer 20 of the thermal insulation pad. This thermal propagation phenomenon may be continuously transmitted to adjacent battery cells, whereby thermal runaway continues until the entire battery module is consumed by fire, leading to a major fire.

Patent Document 1 discloses a high-voltage battery module configured such that a thermal barrier is disposed in a module case, wherein the thermal barrier is disposed between cells within the module case or between the cell and the module case, the thermal barrier includes a first reaction pad and a second reaction pad located around the outer edge of the first reaction pad, and the first reaction pad and the second reaction pad are made of materials with different compression ratios.

Patent Document 1 has the effect of delaying thermal propagation between battery cells when a thermal runaway situation occurs in the cell by providing the thermal barrier in the battery module. However, the thermal barrier of Patent Document 1 includes two types of reaction pads made of different materials, increasing manufacturing costs and complicating the manufacturing process.

Patent Document 2 relates to a secondary battery charging and discharging system, wherein a plurality of battery cells is disposed in a tray, and a thermal insulation pad is located between the outermost one of the plurality of battery cells and the tray to minimize temperature deviation between the battery cells during a charging and discharging process. However, Patent Document 2 does not provide technology to prevent high-temperature gas or flames generated by ignition of a battery cell from spreading to other battery cells.

Therefore, there is a need for a thermal insulation pad interposed between battery cells to maintain a constant surface pressure applied to the battery cells and capable of preventing the diffusion of high-temperature gas, thermal energy, and flames generated during battery cell ignition to adjacent battery cells through simple structural modification.
(Patent Document 1) Korean Patent Application Publication No. 2023-0025973 (2023.02.24)
(Patent Document 1) Korean Patent Application Publication No. 2022-0108972 (2022.08.04)

### [Disclosure]

### [Technical Problem]

The present invention has been made in view of the above problems, and it is an object of the present invention to provide a thermal insulation pad for secondary batteries capable of, in a battery cell stack in which a plurality of pouch-shaped battery cells is stacked, blocking the transmission of high-temperature gas, thermal energy, and flames between the battery cells and securing thermal insulation performance and a battery module including the same.

### [Technical Solution]

A thermal insulation pad for secondary batteries according to the present invention to accomplish the above object includes a support member (100) and a foam layer (200) formed on one surface of the support member (100), wherein the foam layer (200) includes an edge portion (210) and a central portion (220) located inside the edge portion (210), and pores of the edge portion (210) are smaller than pores of the central portion.

Also, in the thermal insulation pad for secondary batteries according to the present invention, the edge portion (210) may have a pore size that prevents gas and liquid from passing therethrough.

Also, in the thermal insulation pad for secondary batteries according to the present invention, the edge portion (210) may have a form in which the foam layer is melted and has no pores.

Also, in the thermal insulation pad for secondary batteries according to the present invention, the edge portion (210) may be thermally compressed in a thickness direction.

Also, in the thermal insulation pad for secondary batteries according to the present invention, the thickness of the edge portion (210) may be 80% or less of the thickness of the central portion (220).

Also, in the thermal insulation pad for secondary batteries according to the present invention, the edge portion (210) may have a form in which the pores are filled with a filler.

Also, in the thermal insulation pad for secondary batteries according to the present invention, the filler may be at least one selected from the group consisting of polyethylene, ethylene-propylene rubber, polyethylene naphthalate, polyethylene terephthalate, and a combination thereof.

Also, in the thermal insulation pad for secondary batteries according to the present invention, the viscosity of the filler may be 20,000 cP to 80,000 cP.

Also, in the thermal insulation pad for secondary batteries according to the present invention, the edge portion (210) and the central portion (220) may be made of the same material.

Also, in the thermal insulation pad for secondary batteries according to the present invention, each of the edge portion (210) and the central portion (220) may include at least one selected from the group consisting of polyurethane, silicone, aerogel, a polyurethane-mica composite, a silicone-mica composite, and an aerogel-mica composite.

Also, in the thermal insulation pad for secondary batteries according to the present invention, the support member (100) may be made of an impermeable film impervious to gas and liquid.

The present invention provides a battery module including the thermal insulation pad, the battery module including a plurality of pouch-shaped battery cells stacked side by side in a vertical direction or a horizontal direction and a thermal insulation pad disposed between the plurality of battery cells.

In addition, the present invention may provide various combinations of the above solving means.

### [Advantageous Effects]

As is apparent from the above description, a thermal insulation pad for secondary batteries according to the present invention has the merit that an edge portion of a foam layer has a pore size that prevents gas and liquid from passing therethrough or is in a form without pores such that gas and liquid cannot pass through an outer periphery of the thermal insulation pad, whereby it is possible to block thermal propagation between the battery cells and to improve the safety of a battery module.

In addition, the thermal insulation pad for secondary batteries according to the present invention has the advantage that the edge portion of the foam layer may have a pore size that prevents gas and liquid from passing therethrough or may be deformed so as to have no pores by thermal compression the edge portion or filling the edge portion with a filler, whereby it is possible to easily manufacture the thermal insulation pad for secondary batteries.

### [Description of Drawings]

FIG. 1 is a perspective view of a conventional thermal insulation pad.
FIG. 2 is a perspective view of a thermal insulation pad for secondary batteries according to a first embodiment of the present invention.
FIG. 3 is a sectional view taken along line A-A' of FIG. 2.
FIG. 4 is a perspective view of a thermal insulation pad for secondary batteries according to a second embodiment of the present invention.
FIG. 5 is a sectional view taken along line B-B' of FIG. 4.
FIG. 6 is a sectional view of a battery module provided with the thermal insulation pad for secondary batteries according to the first embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

A thermal insulation pad for secondary batteries according to the present invention is configured such that a support member and a foam layer are laminated to form an adhesive surface on facing surfaces in contact with each other. Generally, a foam layer has a structure with pores, and therefore gas and liquid may move through the pores. However, the thermal insulation pad for secondary batteries according to the present invention is configured to block the discharge of gas and liquid through an outer periphery of the foam layer.

For example, when pouch-shaped battery cells and thermal insulation pads are alternately arranged to form a battery cell stack, the pouch-shaped battery cells expand in volume during charging and discharging, whereby the pouch-shaped battery cells come into tight contact with the thermal insulation pads, and therefore the transfer of heat energy and gas may be blocked in a direction in which the thermal insulation pads face the pouch-shaped battery cells. However, since side surfaces of the thermal insulation pads in a thickness direction do not face the pouch-shaped battery cells, the inflow and outflow of external and internal substances may be possible. In the present invention, it is possible to prevent thermal propagation through the side surface of the thermal insulation pad in the thickness direction.

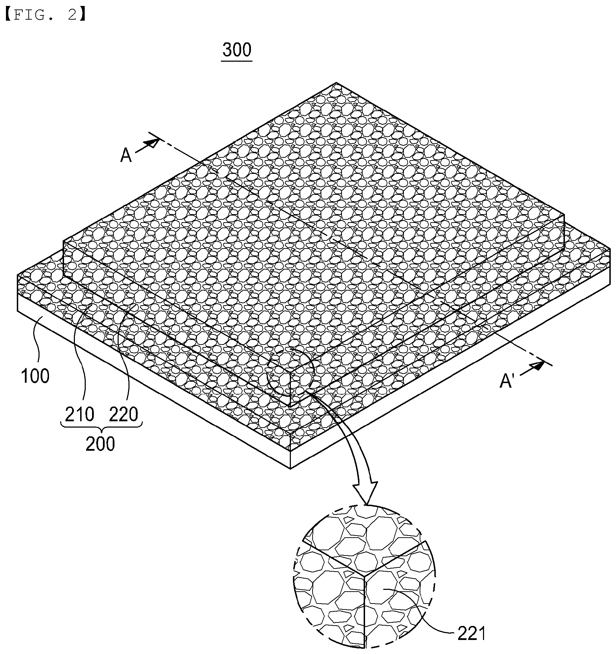

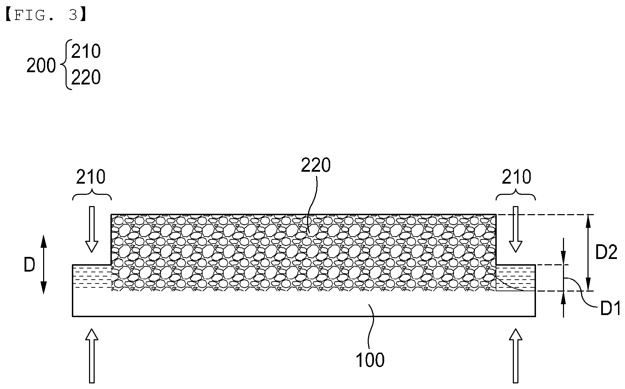

FIG. 2 is a perspective view of a thermal insulation pad for secondary batteries according to a first embodiment of the present invention, and FIG. 3 is a sectional view taken along line A-A' of FIG. 2.

Referring to FIGs. 2 and 3, the thermal insulation pad 300 for secondary batteries according to the first embodiment includes a support member 100 and a foam layer 200 formed on one surface of the support member 100.

The support member 100 may be a base substrate for forming the foam layer 200. It is preferable for gas and liquid introduced into the foam layer 200 not to pass through the support member 100 in order to enhance the thermal insulation performance of the thermal insulation pad 300. The support member 100 may be made of an impermeable film impervious to gas and liquid.

Here, the impermeable film may include, for example, polyurethane, polyester, polyethylene, or polypropylene, and may be configured in a single layer including the same or a multilayer structure having two or more layers.

The foam layer 200 includes an edge portion 210 and a central portion 220 located inside the edge portion 210, wherein it is preferable for the pore size of the edge portion 210 to be less than the pore size of the central portion 220, it is preferable for the edge portion to have a pore size that prevents gas and liquid from passing therethrough, and it is most preferable for the edge portion to have no pores.

Specifically, since it is preferable for the edge portion 210 to be configured such that gas and liquid cannot pass through the edge portion, the edge portion 210 may be provided with pores that are sufficiently small to prevent gas and liquid from passing through the edge portion or may be provided in a form having no pores at all.

As described above, in order to reduce the pore size of the edge portion 210 or to provide a form with no pores at all, the thickness of the edge portion 210 is less than the thickness of the central portion 220, which may be achieved, for example, by thermally compressing the edge portion 210 in the thickness direction.

That is, prior to thermal compression, the edge portion 210 and the central portion 220 are made of the same material and have the same thickness. Of course, second pores 221 in the edge portion 210 and the central portion 220 also have uniform sizes.

However, when only the edge portion 210 is thermally compressed in a thickness direction D, as indicated by arrows in FIG. 3, the thickness of the edge portion 210 becomes smaller, and therefore the pore size of the edge portion 210 decreases or the edge portion 210 has no pores.

Here, although the compression ratio of the edge portion 210 due to thermal compression may vary depending on the material and porosity of the foam layer 200, the thickness D1 of the edge portion 210 may be 80% or less, specifically 50% or less, more specifically 30% or less, of the thickness D2 of the central portion 220.

In addition, since the edge portion 210 is thermally compressed at a temperature higher than the melting point of the foam layer 200, the edge portion 210 is maintained in the thermally compressed state without re-expansion.

As described above, the edge portion 210 and the central portion 220 are made of the same material. For example, each of the edge portion 210 and the central portion 220 may include at least one selected from the group consisting of polyurethane, silicone, aerogel, a polyurethane-mica composite, a silicone-mica composite, and an aerogel-mica composite.

In the thermal insulation pad for secondary batteries according to the first embodiment, as described above, an outer periphery of the edge portion 210 is thermally compressed such that the thickness of the edge portion is reduced, whereby the pore size of the edge portion decreases or the edge portion has no pores. Consequently, gas and liquid cannot move through the edge portion 210.

Of course, in the thermal insulation pad for secondary batteries according to the first embodiment, first pores 221 in the central portion 220 may be easily filled with air having high specific heat. Furthermore, in the state in which the pores are filled with the air, the air cannot be discharged to the outside and remains in the pores, whereby the flow of air is blocked, and therefore the thermal insulation performance may be improved. A detailed description thereof will be given later.

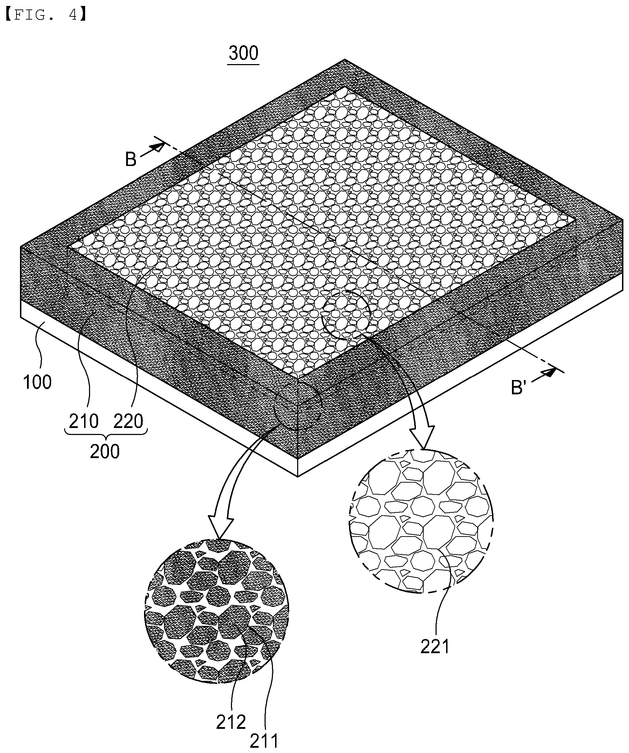

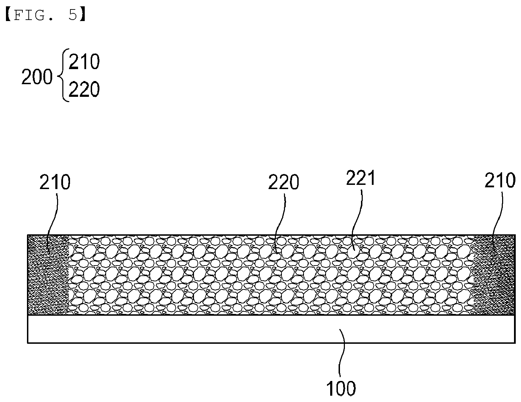

FIG. 4 is a perspective view of a thermal insulation pad for secondary batteries according to a second embodiment of the present invention, and FIG. 5 is a sectional view taken along line B-B' of FIG. 4.

Referring to FIGs. 4 and 5, the thermal insulation pad 300 for secondary batteries according to the second embodiment is configured such that an edge portion 210 is not thermally compressed and the thickness of the edge portion 210 is substantially equal to the thickness of a central portion 220.

In the thermal insulation pad 300 for secondary batteries according to the second embodiment, first pores 211 in the edge portion 210 are filled with a filler 212. For example, the first pores 211 located near the surface of the edge portion 210 may be filled with the filler 212, most of the first pores 211 in the edge portion 210 may be filled with the filler 212, or all of the first pores 211 in the edge portion 210 may be filled with the filler 212, thereby preventing the movement of gas and liquid through the edge portion 210.

Here, the filler 212 must fill the first pores 211 of the edge portion 210 so as to be stably supported and fixed therein, and therefore the filler may be made of a high-viscosity material. Although the viscosity of the filler 212 may be influenced by the pore size of the foam layer 200, the viscosity of the filler 212 may be, for example, 20,000 cP to 80,000 cP, specifically 40,000 cP to 80,000 cP.

If the viscosity of the filler is less than 20,000 cP, the filler may not be stably supported in the first pores 211, and if the viscosity of the filler exceeds 80,000 cP, filling of the first pores 211 with the filler may be difficult. Therefore, it is preferable for the viscosity of the filler to be within the aforementioned range.

Meanwhile, a paste in which an inorganic filler and a thickening agent are dispersed may be used as the aforementioned high-viscosity filler. In this case, the inorganic filler may be at least one selected from the group consisting of SiO₂, SiN₄, ZrP, Al₂O₃, TiO₂, ZnO, MgO, and BaTiO₃.

In addition, a polymer resin may be used as the filler, wherein the polymer resin may be at least one selected from the group consisting of polyethylene, ethylene-propylene rubber, polyethylene naphthalate, polyethylene terephthalate, and a combination thereof.

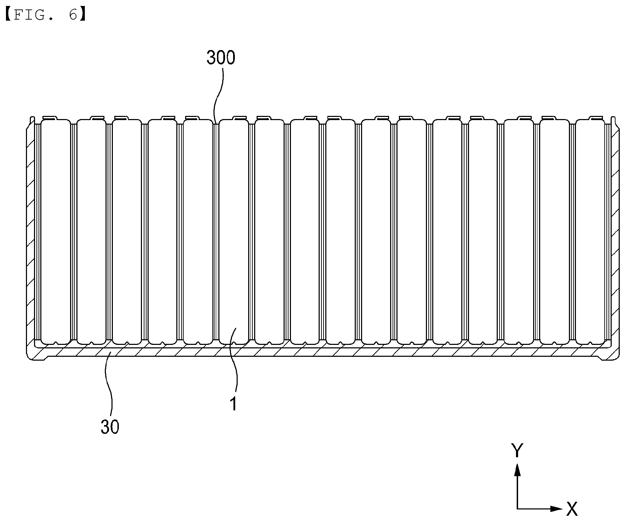

FIG. 6 is a sectional view of a battery module provided with the thermal insulation pad for secondary batteries according to the first embodiment of the present invention.

Referring to FIGs. 2, 3, and 6, the battery module according to the present invention is configured such that a plurality of pouch-shaped battery cells 1 is stacked in the state in which the pouch-shaped battery cells are erected side by side on the bottom of a module case 30.

In addition, thermal insulation pads 300 are interposed between the pouch-shaped battery cells 1 and between the module case 30 and the pouch-shaped battery cell 1. Here, the thermal insulation pad 300 may be configured to have a size corresponding to the area of a rectangular side surface of the pouch-shaped battery cell 1 excluding a sealed portion.

The thermal insulation pad 300 may function as a spacer during initial charging and discharging of the battery module. Subsequently, when the volume of the pouch-shaped battery cell 1 expands and pressure is applied to the thermal insulation pad 300, the thermal insulation pad may absorb that pressure, thereby reducing deviation in pressure applied to the pouch-shaped battery cell 1.

Furthermore, the thermal insulation pad 300 prevents thermal propagation in a thickness direction X thereof, i.e., toward an adjacent pouch-shaped battery cell 1. Specifically, even if one of a plurality of pouch-shaped battery cells 1 ignites and emits high-temperature gas, high thermal energy, and flames, it is possible to prevent thermal propagation in the thickness direction X of the thermal insulation pad.

The pouch-shaped battery cells 1 and the thermal insulation pad are disposed in tight contact with each other, and the edge portion 210 of the thermal insulation pad has a structure that prevents the movement of gas and liquid therethrough. Consequently, the air in the second pores 221 of the central portion 220 of the thermal insulation pad may remain without being released.

Therefore, when the thermal insulation pad 300 according to the present invention is used, thermal propagation between the pouch-shaped battery cells 1 may be delayed or prevented, thereby contributing to improvement in safety of the battery module.

Although the battery module provided with the thermal insulation pad according to the first embodiment has been described, even if the battery module is provided with the thermal insulation pad according to the second embodiment, thermal propagation in the thickness direction of the thermal insulation pad may be prevented, and therefore the same effect may be achieved.

Those skilled in the art to which the present invention pertains will appreciate that various applications and modifications are possible within the category of the present invention based on the above description.

### (Description of Reference Numerals)

1: Pouch-shaped battery cell
10, 100: Support member
20, 200: Foam layer
30: Module case
210: Edge portion
211: First pore 212: Filler
220: Center portion 221: Second pore
300: Thermal insulation pad

## Claims

1. A thermal insulation pad for secondary batteries, the thermal insulation pad comprising:
a support member; and
a foam layer formed on one surface of the support member, wherein
the foam layer comprises an edge portion and a central portion located inside the edge portion, and
pores of the edge portion are smaller than pores of the central portion.

2. The thermal insulation pad according to claim 1, wherein the edge portion has a pore size that prevents gas and liquid from passing therethrough.

3. The thermal insulation pad according to claim 2, wherein the edge portion has a form in which the foam layer is melted and has no pores.

4. The thermal insulation pad according to claim 2, wherein the edge portion is thermally compressed in a thickness direction.

5. The thermal insulation pad according to claim 4, wherein a thickness of the edge portion is 80% or less of a thickness of the central portion.

6. The thermal insulation pad according to claim 2, wherein the edge portion has a form in which the pores are filled with a filler.

7. The thermal insulation pad according to claim 6, wherein the filler is at least one selected from a group consisting of polyethylene, ethylene-propylene rubber, polyethylene naphthalate, polyethylene terephthalate, and a combination thereof.

8. The thermal insulation pad according to claim 6, wherein a viscosity of the filler is 20,000 cP to 80,000 cP.

9. The thermal insulation pad according to claim 2, wherein the edge portion and the central portion are made of the same material.

10. The thermal insulation pad according to claim 9, wherein each of the edge portion and the central portion comprises at least one selected from a group consisting of polyurethane, silicone, aerogel, a polyurethane-mica composite, a silicone-mica composite, and an aerogel-mica composite.

11. The thermal insulation pad according to claim 10, wherein the support member is made of an impermeable film impervious to gas and liquid.

12. A battery module comprising the thermal insulation pad according to any one of claims 1 to 11, the battery module comprising:
a plurality of pouch-shaped battery cells stacked side by side in a vertical direction or a horizontal direction; and
a thermal insulation pad disposed between the plurality of battery cells.
